Europäisches Patentamt

European Patent Office

Office européen des brevets

(11) Numéro de publication: **0 412 009 A1**

## DEMANDE DE BREVET EUROPEEN

(21) Numéro de dépôt: **90402203.5**

(51) Int. Cl.5: **F02B 19/12**, F02B 23/10

(22) Date de dépôt: **01.08.90**

(30) Priorité: **02.08.89 FR 8910440**

(43) Date de publication de la demande:
**06.02.91 Bulletin 91/06**

(84) Etats contractants désignés:
**DE GB IT**

(71) Demandeur: **REGIE NATIONALE DES USINES RENAULT**
**Boîte postale 103 8-10 avenue Emile Zola**
**F-92109 Boulogne-Billancourt(FR)**

(72) Inventeur: **Gastaldi, Patrick**
**22, rue Geneviève Couturier**
**F-92500 Rueil Malmaison(FR)**
Inventeur: **Cliville, François**
**242, Rue de Seine**
**F-76410 Cleon(FR)**

(74) Mandataire: **Ernst-Schonberg, Michel et al**
**8/10, avenue Emile Zola**
**F-92109 Boulogne Billancourt(FR)**

(54) **Moteur multicylindre à injection d'essence, comportant trois soupapes par cylindre.**

(57) Le moteur multicylindre à injection d'essence, selon l'invention, comprend, pour chacun de ses cylindres : une culasse (1) formant couvercle au-dessus du cylindre et comportant une cavité (6) qui constitue la chambre de combustion et communique avec l'espace (10) formé entre la face supérieure (3a) du piston (3) et la culasse (1); deux soupapes d'admission de l'air (4a,4b) et une soupape d'échappement (5) montée parallèlement à l'axe du cylindre; une bougie d'allumage (8) et un injecteur (7) débouchant dans la chambre de combustion. L'ensemble formé par les soupapes d'admission et d'échappement, la chambre de combustion, la bougie et l'injecteur, est disposée de telle sorte que lorsque le piston du cylindre effectue un mouvement ascendant, l'air ou le mélange air/essence soit chassé vers la chambre de combustion en créant une microturbulence favorisant la combustion du mélange.

FIG. 2

EP 0 412 009 A1

# MOTEUR MULTICYLINDRE À INJECTION D'ESSENCE, COMPORTANT TROIS SOUPAPES PAR CYLINDRE.

La présente invention concerne un moteur multicylindre à injection d'essence dont chaque cylindre est équipé de trois soupapes, utilisé par exemple dans l'industrie automobile.

Les moteurs à essence, connus également sous le nom de moteurs à allumage commandé, peuvent être classés en deux groupes principaux : moteurs à charge homogène (à carburateur ou à injection indirecte) et moteurs à injection directe.

Sur les moteurs à charge homogène, l'essence est prémélangée à l'air dans la conduite d'admission au moyen d'un carburateur ou d'un injecteur situé en amont de la ou des soupapes d'admission. Le couple moteur est régulé en actionnant un papillon obturant une partie du collecteur d'admission et ainsi en réduisant la quantité de mélange introduite dans les cylindres au moyen des soupapes d'admission. Le mélange gazeux est alors homogène à l'intérieur de chaque cylindre au moment de l'allumage.

Le rendement de ce type de moteur est fortement altéré par des pertes par pompage dues au principe de vannage à l'admission, surtout à faible charge. Il en résulte une consommation importante de l'essence lorsque le moteur est peu sollicité, d'où des émissions de dioxyde de carbone élevées. En outre, le fonctionnement avec un mélange pauvre en essence aux charges partielles s'avère instable à cause d'une inadéquation entre le principe de combustion en charge homogène et l'utilisation de forts excès d'air dans le mélange gazeux. La réduction des émissions de gaz polluants, notamment des hydrocarbures imbrûlés, des oxydes d'azote et du monoxyde de carbone, est ainsi extrêmement difficile avec ce type de moteur.

Sur les moteurs à injection directe ou à charge stratifiée, le couple moteur est régulé par la quantité d'essence admise directement dans les cylindres du moteur, en supprimant le papillon dans la conduite d'admission de l'air. Il en résulte ainsi qu'une partie des pertes par pompage de l'air est supprimée. Le principe de l'injection directe permet de créer une zone riche en essence au voisinage de l'injecteur et de la bougie minimisant les émissions des oxydes d'azote lors de la combustion. Le monooxyde de carbone et les hydrocarbures, générés pendant la combustion, peuvent être oxydés durant la détente, grâce à l'excès d'air des zones avoisinantes. La vaporisation complète du mélange à l'intérieur de la chambre de combustion qui réduit les températures de début de cycle, ainsi que les vitesses de combustion élevées, autorisent des rapports volumétriques importants pour chaque cylindre, d'où un gain en rendement pour le moteur, et/ou permettent d'utiliser des carburants à faible indice d'octane.

L'obtention d'une bonne combustion pour ce type de moteur passe par la maîtrise des mouvements d'air à l'intérieur de la chambre de combustion et de leur adéquation avec l'orientation et la forme du jet d'injection. En pratique, il est très difficile de satisfaire de telles conditions pour réaliser un moteur fiable.

En effet, on connaît, à l'heure actuelle, des moteurs à charge stratifiée comportant une préchambre de combustion, une bougie d'allumage et un injecteur d'essence situés dans cette préchambre, et communiquant avec la chambre de combustion par l'intermédiaire d'une ouverture à section réduite. Des essais effectués sur ce type de moteur n'ont pas donné les résultats escomptés, notamment en ce qui concerne la consommation d'essence et les performances du moteur. De plus, il y a des émissions d'hydrocarbures qui ne sont pas réduites à cause essentiellement des pertes thermiques importantes dues aux parois entre la préchambre de combustion et la chambre de combustion.

D'autres tentatives pour réaliser un moteur à charge stratifiée avec une chambre de combustion ouverte et une injection directe dans la chambre de combustion, semblable à un moteur diesel, n'ont pas été concluantes, car des problèmes de dualité faible charge/forte charge et d'une mauvaise maîtrise de la combustion pour certains cas de fonctionnement demeurent pratiquement insolubles jusqu'à présent.

La présente invention a pour objet de réaliser un moteur multicylindre à injection d'essence, peu polluant, de structure nouvelle, ayant une faible consommation d'essence et un rendement élevé.

Plus spécifiquement, l'invention a pour objet un moteur à allumage commandé à charge stratifiée avec trois soupapes par cylindre et à injection directe dans la chambre de combustion.

L'invention a également pour objet un moteur à allumage commandé à charge homogène, comportant trois soupapes par cylindre.

Le moteur multicylindre à injection d'essence, selon l'invention, comprend des moyens d'admission et d'échappement de l'air, des moyens d'injection de l'essence, des moyens d'allumage pour provoquer la combustion d'un mélange gazeux air/essence à l'intérieur du moteur. Selon l'invention, le moteur comprend, pour chacun de ses cylindres :
- une culasse formant couvercle au-dessus du cylindre et comportant une cavité qui constitue la chambre de combustion du cylindre et communique directement avec l'extrémité supérieure du cylindre;
- deux soupapes d'admission de l'air frais montées dans la culasse au voisinage de la cavité, parallèlement à l'axe du cylindre;
- une soupape d'échappement de gaz parallèle à l'axe du cylindre et débouchant dans la paroi supérieure de la chambre de combustion;
- une bougie d'allumage montée à travers une paroi de la chambre de combustion et dirigée vers l'intérieur de cette chambre,
l'ensemble formé par les soupapes d'admission et d'échappement, la chambre de combustion et la bougie d'allumage étant disposées de telle sorte que lorsque le piston du cylindre effectue un nouvement de translation vers le haut, l'air ou le mélange gazeux air/essence soit chassé vers la chambre de combustion en créant une microturbulence favorisant la combustion du mélange gazeux.

La face supérieure du piston peut présenter des embrèvements qui évitent tout contact mécanique entre le piston et les soupapes d'admission de l'air lorsque le piston arrive à son point mort haut. La face supérieure du piston peut également présenter des rainures favorisant la création de la microturbulence du mélange gazeux air/essence dans la chambre de combustion, lorsque le piston effectue un mouvement vers le haut.

Selon un mode de réalisation préféré de l'invention, chaque cylindre est pourvu d'un injecteur qui débouche de façon inclinée dans une paroi de la chambre de combustion au voisinage de la bougie d'allumage. De préférence, l'injecteur est orienté vers le centre de la cavité formant chambre de combustion.

La chambre de combustion peut présenter des sections horizontales constantes et une paroi supérieure horizontale. L'injecteur peut alors être monté sur la paroi supérieure. La bougie d'allumage au voisinage de l'injecteur est avantageusement montée sur la paroi latérale de la chambre de combustion et orientée radialement vers l'intérieur de la chambre.

Selon un autre mode de réalisation de l'invention, le moteur est pourvu d'au moins un injecteur débouchant dans la conduite d'admission de l'air en amont des soupapes d'admission. Le moteur est dans ce cas du type à injection indirecte à charge homogène.

L'invention sera mieux comprise à l'étude de la description détaillée d'un mode de réalisation particulier de l'invention, pris à titre nullement limitatif et illustré par les dessins annexés, sur lesquels :

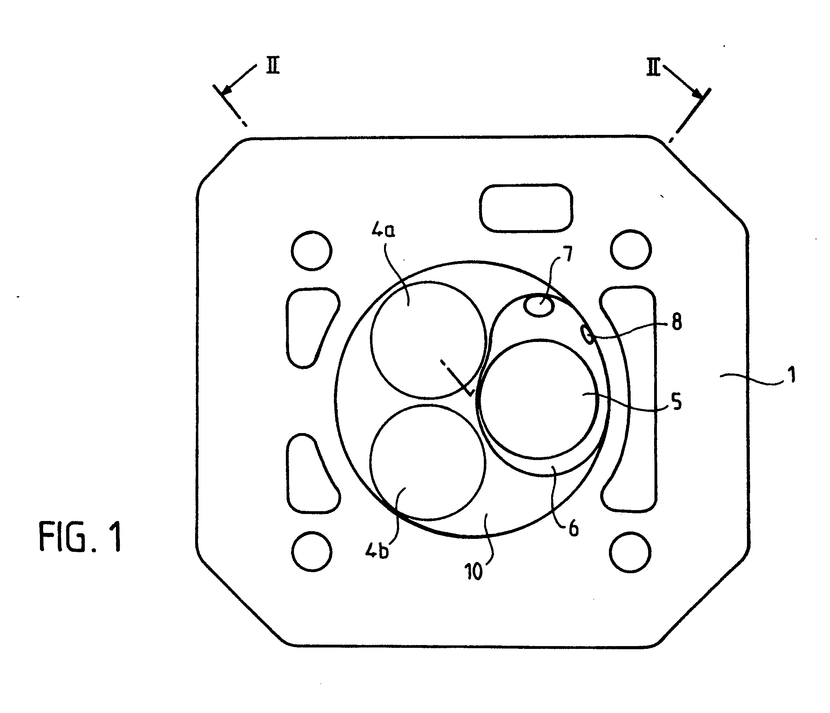

la figure 1 est une vue schématique de dessous d'une culassé selon l'invention;

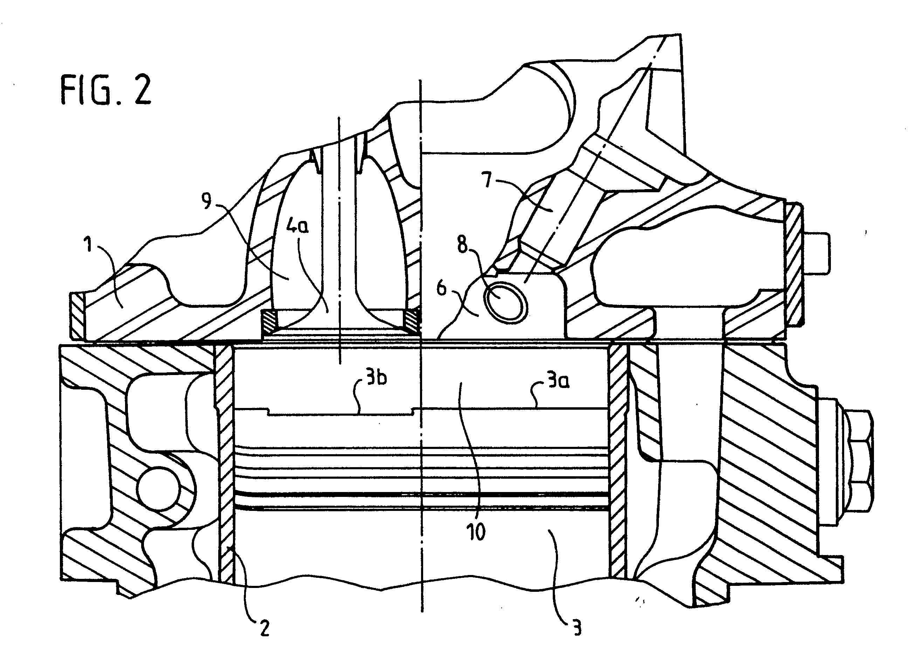

la figure 2 montre une vue en coupe axiale d'un cylindre avec une culasse correspondante selon II-II de la figure 1.

Sur les figures est représenté l'un des cylindres du moteur à injection d'essence, selon la présente invention. Le cylindre comprend une culasse 1 disposée sur sa partie supérieure, un alésage cylindrique 2 sensiblement vertical dans lequel se déplace un piston 3. Dans la culasse, sont montées verticalement deux soupapes d'admission de l'air 4a,4b et une soupape d'échappement de l'air 5, toutes parallèlement à l'axe du cylindre.

La culasse 1 est pourvue, à côté des soupapes d'admission 4a,4b et au-dessus de l'alésage cylindrique 2, d'une cavité 6 formant une chambre de combustion du cylindre. La chambre de combustion 6 présente, dans cet exemple, des sections horizontales constantes et une paroi supérieure horizontale. La soupape d'échappement 5 débouche dans la paroi supérieure de la chambre de combustion 6. Il en résulte une dénivellation entre les soupapes d'admission 4a,4b et la soupape d'échappement 5. La chambre de combustion 6 peut être réalisée sous forme circulaire, ovoïde ou autre, avec des sections horizontales constantes ou pas.

Sur la paroi supérieure est monté, de façon inclinée, un injecteur d'essence 7 qui envoie un jet d'essence vers le centre de la chambre de combustion 6. Au voisinage de l'injecteur 7 et sur la paroi latérale de la chambre de combustion 6 est montée une bougie d'allumage 8.

Pendant la phase d'admission de l'air, le piston 3 effectue un mouvement descendant, les soupapes d'admission de l'air 4a et 4b étant ouvertes. L'air amené par la conduite d'admission, non représenté, arrive d'abord dans la chambre 9 en amont des soupapes d'admission 4a et 4b, et ensuite traverse l'ouverture des soupapes d'admission et remplit l'espace 10 formé entre la face supérieure 3a du piston et la culasse 1.

La face supérieure 3a du piston 3 peut comporter des évidements 3b coopérant avec les soupapes d'admission 4a et 4b lorsque le piston 3 arrive à sa position de point mort haut, afin d'éviter un contact mécanique entre le piston 3 et les soupapes d'admission 4a et 4b. La face supérieure 3a du piston peut également présenter des canaux qui favorisent la création d'un régime turbulent de l'air dans l'espace 10 et la chambre de combustion 6, lorsque le piston 3 effectue un mouvement ascendant.

La chambre de combustion 6, en retrait et désaxée par rapport à l'alésage cylindrique 2 du cylindre et communiquant avec l'espace 10 au-dessus du piston 3, facilite la création d'un régime turbulent de l'air lorsque le piston 3 monte verticalement. Ce régime turbulent de l'air mélangé avec de l'essence, permet une combustion optimale du mélange dans la chambre de combustion 6.

Lorsque l'injection de l'essence par l'injecteur 7 dans la chambre de combustion 6 a lieu pendant la phase d'admission de l'air, le jet d'essence, désaxé par rapport à l'alésage 2, effectue avec de l'air frais un mouvement tourbillonnaire à l'intérieur de l'espace 10 où se forme un mélange homogène air/essence. Lorque le piston 3 effectue un mouvement ascendant, les soupapes d'admission 4a et 4b sont fermées et le mélange air/essence est comprimé dans l'espace 10 et chassé vers la chambre de combustion 6, en créant un niveau élevé de microturbulence dans la chambre de combustion. Lorsque la bougie d'allumage 8 est actionnée, la combustion a lieu pour tout le volume du mélange air/essence contenu dans la chambre de combustion 6 et éventuellement dans l'espace 10, si celui-ci n'est pas réduit à un volume négligeable. Dans ce cas, la totalité du mélange air/essence participe à la combustion, ce qui permet au cylindre correspondant de développer une puissance maximale en pleine charge.

Lorsque l'injection d'essence a lieu durant la montée du piston 3, le jet d'essence est repoussé dans la chambre de combustion 6, au voisinage de la bougie 8, par l'air en compression violemment chassé de l'espace 10 par effet de coincement. L'essence se mélange ainsi avec seulement une partie de l'air contenu dans la chambre de combustion 6 et l'espace 10, ce qui a pour effet de créer une stratification optimale. La combustion rapide se déroule alors dans une zone riche voisine de la bougie 8 et génère peu d'oxydes d'azote. Une oxydation des gaz polluants, tels que les hydrocarbures imbrûlés et le monoxyde de carbone, est ensuite générée durant la détente par l'air restant, ce qui a pour effet une réduction importante des émissions nocives à l'échappement. Ce réglage du moment d'injection de l'essence dans le cycle de fonctionnement du moteur est utilisé lorsque le couple moteur demandé par le conducteur du véhicule automobile est faible.

D'autres mouvements d'air peuvent se combiner avec ceux déjà existants en obturant, partiellement ou en totalité, l'une des deux soupapes d'admission 4a et 4b. Ce procédé peut également servir à réduire la masse d'air introduite durant le cycle moteur.

On peut remarquer que l'exemple illustré montre un moteur à injection directe dans la chambre de combustion. L'invention peut concerner également un moteur à injection indirecte à charge homogène. Dans ce cas, il suffit de placer l'injecteur 7 dans la conduite d'admission, non représentée, en amont des soupapes d'admission de l'air 4a,4b. La structure particulière de la chambre de combustion 6 permet de générer un régime microturbulent du mélange air/essence, afin d'obtenir une combustion optimale du mélange.

Il est à signaler que le moteur de l'invention peut fonctionner comme un moteur à alcools qui est également du type à allumage commandé. Dans ce cas, le carburant injecté par les injecteurs est un alcool au lieu d'être de l'essence.

## Revendications

1. Moteur multicylindre à injection de carburant, notamment d'essence, comprenant des moyens d'admission et d'échappement de l'air, des moyens d'injection de l'essence, des moyens d'allumage pour provoquer la combustion d'un mélange gazeux air/essence à l'intérieur du moteur. caractérisé par le fait qu'il comprend, pour chacun de ses cylindres :
- une culasse (1) formant couvercle au-dessus du cylindre et comportant une cavité (6) qui constitue la chambre de combustion du cylindre et communique directement avec l'extrémité supérieure du cylindre ;
- deux soupapes d'admission de l'air frais (4a, 4b) montées dans la culasse au voisinage de la cavité, parallèlement à l'axe du cylindre ;
- une soupape d'échappement de gaz (5) parallèle à l'axe du cylindre et débouchant dans la paroi supérieure de la chambre de combustion ;
- une bougie d'allumage (8) montée à travers une paroi de la chambre de combustion et dirigée vers l'intérieur de cette chambre ;
- un injecteur (7) débouchant de façon inclinée dans une paroi de la chambre de combustion au voisinage de la bougie d'allumage ;
l'ensemble forme par les soupapes d'admission et d'échappement, la cavité constituant la chambre de combustion et la bougie d'allumage étant disposé, de telle sorte que lorsque le piston (3) du cylindre effectue un mouvement de translation vers le haut, l'air ou le mélange gazeux air/essence soit chassé vers la chambre de combustion en créant une micro-turbulence favorisant la combustion du mélange gazeux.

2. Moteur multicylindre à injection selon la revendication 1, caractérisé par le fait que l'injecteur est orienté vers le centre de la chambre de combustion (6).

3. Moteur multicylindre à injection selon la revendication 1 ou 2. caractérisé par le fait que l'injecteur (7) est monté sur la paroi supérieure de la chambre de combustion et que la bougie d'allumage (8) est orientée radialement vers l'intérieur de la chambre de combustion.

4. Moteur multicylindre à injection selon la revendication 1. caractérisé par le fait qu'il comporte au moins un injecteur débouchant dans une conduite d'admission de l'air en amont des soupapes d'admission.

5. Moteur multicylindre à injection selon l'une quelconque des revendications précédentes, caracterisé par le fait que la chambre de combustion présente une section horizontale constante et que la paroi supérieure de la chambre est sensiblement horizontale.

6. Moteur multicylindre à injection selon l'une quelconque des revendications précédentes, caractérisé par le fait que la face supérieure (3a) du piston d'un cylindre présente des évidements (3b) coopérant avec les soupapes d'admission de l'air lorsque le piston arrive à son point mort haut.

7. Moteur multicylindre à injection selon l'une quelconque des revendications précédentes, caractérisé par le fait que la surface supérieure (3a) du piston d'un cylindre présente des rainures favorisant la création de la micro-turbulence du mélange gazeux air/essence à l'interieur de la chambre de combustion.

FIG. 1

6

FIG. 2

EP 0 412 009 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | DE-A-1922026 (FRACKE)<br>* le document en entier * | 1, 5, 6 | F02B19/12<br>F02B23/10 |
| Y | FR-A-977695 (CITROEN)<br>* page 1, colonne de gauche, lignes 1 - 8 *<br>* page 2, colonne de gauche, lignes 11 - 18 *<br>* page 2, colonne de gauche, lignes 36 - 39 * | 1, 5, 6 | |
| A | FR-A-2178365 (CHRYSLER FRANCE)<br>* page 2, lignes 8 - 23 *<br>* page 3, lignes 1 - 28; figures 1, 2 * | 1, 5, 6 | |
| A | EP-A-85258 (RICARDO)<br>* page 1, lignes 1 - 6 *<br>* page 8, ligne 12 - page 9, ligne 8 * | 1 | |
| A | PATENT ABSTRACTS OF JAPAN<br>vol. 10, no. 181 (M-492)(2237) 25 juin 1986,<br>& JP-A-61 28713 (YANMAR DIESEL) 08 février 1986,<br>* le document en entier * | 1 | |
| A | PATENT ABSTRACTS OF JAPAN<br>vol. 8, no. 276 (M-346)(1713) 18 décembre 1984,<br>& JP-A-59 147819 (YANMAR DIESEL) 24 août 1984,<br>* le document en entier * | 1, 5, 6 | **DOMAINES TECHNIQUES RECHERCHES (Int. Cl.5)**<br><br>F02B |
| A | DE-A-1526293 (FORD-WERKE)<br>* page 21, lignes 1 - 29; figures 13, 13a * | 1, 2, 3 | |
| A | DE-A-3622616 (VW)<br>* colonne 3, lignes 12 - 42 * | 4 | |
| A | FR-A-870359 (SALUSSE)<br>* page 2, lignes 5 - 18; figures 1, 2 * | 2 | |
| A | GB-A-1119758 (DAIMLER-BENZ)<br>* page 2, ligne 127 - page 3, ligne 35; figures 7-9 * | 1, 5 | |

Le présent rapport a été établi pour toutes les revendications

| Lieu de la recherche | Date d'achèvement de la recherche | Examinateur |
|---|---|---|
| LA HAYE | 09 OCTOBRE 1990 | JORIS J.C. |